# EUROPEAN PATENT SPECIFICATION

(11) **EP 3 622 571 B1**
(45) Date of publication and mention of the grant of the patent: **26.01.2022**
(21) Application number: 18721810.2
(22) Date of filing: 08.05.2018
(51) Int. Cl.: B65D 79/02, B65D 51/24, H01M 6/04, H01M 6/40, H01M 50/10, H01M 50/20, B65D 23/00, B65D 25/00, H01M 50/209

(54) **SMART PACKAGING FOR ANY TYPE OF PRODUCT**
INTELLIGENTE VERPACKUNG FÜR JEDE ART VON PRODUKT
EMBALLAGE INTELLIGENT POUR UN QUELCONQUE TYPE DE PRODUIT

(30) Priority: 10.05.2017 BE 201705346
(43) Date of publication of application: 18.03.2020
(73) Proprietor: Anheuser-Busch InBev S.A., 1000 Brussels (BE)
(72) Inventor: THOMPSON, Keenan, 3000 Leuven (BE); HENDERSON, Charles, Melbourn SG8 6DP (GB)
(74) Representative: Oxley, Robin John George
(86) International application number: PCT/EP2018/061792
(87) International publication number: WO 2018/206543

(56) References cited:
- EP-A1- 2 225 978
- EP-A1- 2 662 304
- EP-A1- 3 336 011
- WO-A1-96/02438
- US-A1- 2008 296 191
- US-A1- 2012 274 470
- US-A1- 2015 122 688

## Description

### FIELD OF THE INVENTION

The present invention relates to smart packaging, in particular to integrated smart packaging for a product of any type, especially suitable for containing food, more specifically for carbonated beverage, and in particular for functioning as a beer container, in particular beer-integrated smart packaging.

### BACKGROUND OF THE INVENTION

In general, smart packaging incorporates features that indicate or communicate product status or changes, environmental status or changes, or other information. It is a dynamic and preferably active extension of the static and passive communication function of traditional packaging, and communicates information to the consumer based on its ability to sense, detect, or record external or internal changes in the product's environment.

State of the art smart packaging systems provide health and safety of the product for the consumer and also monitor the condition of packed products to give information about shelf life and regarding the quality of the during transport and storage. In this technique indicators and sensors are used instead of time consuming, expensive quality measurements for improving the shelf life and providing product safety. In smart packaging system indicators give information about product quality by surrounding conditions and head space gases of packagings, also indicators can be attached to the packaging surface or integrate to packagings which are improved for determining metabolite residue formed during storage. Temperature, microbial spoilage, packaging integrity, physical shock, freshness of the packed product can be controlled.

An example thereof is US2015307245 directed to a wine capsule that is configured to be attached to a beverage container and to provide a user with information relating to the temperature history of the beverage. The data logger includes at least one energy storage component (e.g., one or more capacitors), an energy harvester, a temperature sensor, at least one processor, at least one first memory, and at least one wireless communicator. The energy harvester harvests ambient electromagnetic energy. The wireless communicator is configured to transmit the stored information to a personal computer, a smartphone or tablet, or a dedicated reader device which is configured to communicate with and receive information from the wireless communicator.

A obvious drawback of the system of US2015307245 is clearly that such wine capsule is not suitable for being combined with other types of packaging than bottles. In addition, as soon as the wine capsule is removed from the bottle, the bottle itself becomes a normal "stupid" bottle.

A more important general drawback however is that, although the above system covers the basic needs of product containment and quality control, it does not address the clear consumers' demand for packaging that is more advanced with respect to consumer interaction and creativity.

Thanks to the coming of inexpensive electronics and printing technology it recently became possible to create smart packaging that permit amongst others tracking of purchases, inventory control, automatic re-ordering, and assessment of tampering, packaging breeching etc. In addition, smart packaging containing lights, sound production, different types of sensors and corresponding sensory inputs, smart electronics, and interaction between humans, smart devices, vending machines, coupled with wireless communication, results in enhanced and personalized experience for the consumer. Also point of purchase personalized advertising, inducements, prizes, and a game-like environment can integrate at various psychological levels to positively reinforce brand loyalty and promote purchases.

In the above context, the smart packaging described in WO2015147995 contains electronics that can enable a user / purchaser to interact with the packaging and cause actions to happen either on the packaging itself or on a smart device like a smart phone or computer or a vending machine, or communicate or cause communication with a website where a data base might reside. For instance, a soda bottle or can or bag of chips can have the capability of being touched to a smart phone, having a code read, and the smart phone can take one or more actions based on the type of product within its proximity.

The smart packaging includes at least one battery and/or energy storage element and/or energy receiving element; an element configured to store information; an element configured to sense being touched; an element configured to display information and/or an element configured to generate light; an element configured to receive and/or transmit information; and circuitry electrically one or more elements of the packaging to one another.

An aspect that has been neglected in smart packaging as described in WO2015147995, is to integrate smart packaging technology within the existing reality of today including today's industrial packaging processing and their application, i.e. the aspect of integrating intelligent technologies up to the level of industrial processing of for example a beverage can, and the product specifications, and raw materials involved has been neglected. Smart packaging has always been described without efficient implementation of its manufacturing in industrial processing been taken in account.

In addition, WO2015147995 does not address the functionalities specifically associated and required with the content of said packaging, i.e. carbonated beverages, in particular beer. As an example, an underlying objective is to provide for a smart packaging which can communicate time and temperature history of food products such as beer to ensure optimum maturation, proper aging, and to avoid misuse or mishandling. Another example of an underlying objective is to provide for a smart packaging which communicates the state of beverages within the packaging, either visually, either by illumination, either by sound, or haptic experiences, i.e. in case of food products, reaching ideal consumption temperature vs food type is communicated.

Further, smart packaging is a compelling proposition made increasingly relevant by the relentless and fast pace at which digital technologies integrate consumers' lives, and the proliferation of the Internet of Things (loT). An extensive list of applications in this sense, enabled by the smart packaging in accordance with the present invention will be provided in below description.

Another very important objective of smart packaging according to the present invention is to reduce the production cost, even to the point where it will be cost-effective to put intelligent features and communication means on an inexpensive product, and in particular on disposable products.

### SUMMARY OF THE INVENTION

The present invention is directed to a smart metal, glass, paper-based, wood-based, or plastic packaging comprising at least one electric power source, characterized in that a structural component of the packaging forms a component of the at least one electric power source, said structural component being a component or material layer offering a contribution to enable the packaging to contain a product or to be transported , wherein the structural component is an essential component of the electric power source having the necessary material characteristics required for proper functioning of the electric power source.

in addition, the present invention is directed to a method for manufacturing a smart packaging is provided comprising the steps of manufacturing a packaging and constituting at least one electric power source on or in the packaging, wherein a structural component of the packaging is taken for constituting a component of the at least one electric power source, said structural component being a component or material layer offering a contribution to enable the packaging to contain a product or to be transported, and wherein the structural component is an essential component of the electric power source having the necessary material characteristics required for proper functioning of the electric power source.

### SHORT DESCRIPTION OF THE DRAWINGS:

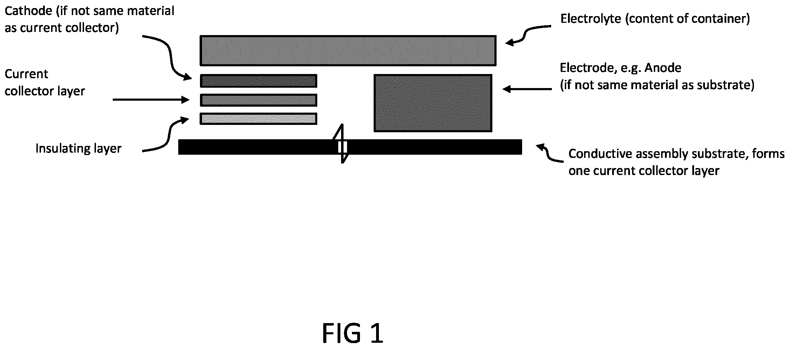

FIG 1-9 illustrate several embodiments of smart packaging in accordance with the present invention.

### DETAILED DESCRIPTION OF THE INVENTION

A smart packaging and a method for manufacturing such packaging according to the invention are defined in the appended claims.

As the world is moving increasingly into internet-of-things, smart packaging in accordance with the present invention offers an extensive range of intelligent functionalities in packaging, integrated up to the level of industrial processing, which can be used for consumer engagement and brand enhancement. It can amongst others also be used for proof of product authenticity and origin, tamper evidence and even further to source and delivery tracking and supply chain optimization.

In addition, smart packaging according to the present invention may drive down the cost of smart packaging to produce a smart and connected product to the point where it will be cost-effective to put intelligent features and communication means on an inexpensive product. Therefore, in a first embodiment, the present invention provides a smart metal, glass, paper-based, wood-based, or plastic packaging comprising at least one electric power source, characterized in that a structural component of the packaging forms a component of the at least one electric power source.

The smart packaging may be primary or secondary.

In the context of the present invention, the product to be packed in the smart packaging may be any type of product, solid or not solid, any type of substance, liquid, food, non-food, etc. In particular, liquid products are applicable such as liquid foods, especially drinks (carbonated, not carbonated, alcoholic, non-alcoholic, juices, sport drinks), or paints, agents, chemicals, solvents, oils, etc.

A structural component of a smart primary packaging is understood as a material component which is necessary to the packaging for functioning as a product container, i.e. for enabling the packaging to contain a product or to be transported, more specifically for functioning as a food container, more specifically as a carbonated beverage container, and in particular for functioning as a beer container.

A structural component of a smart secondary packaging is understood as a material component which is necessary to the packaging for holding a primary packaging .

A structural component of a smart secondary packaging is understood as being a component or material layer offering a contribution to enable the packaging to contain a product or to be transported.

A component or material layer which does not offer any contribution to enable the packaging to contain a product or to be transported, and for example merely serves as a decorative layer or decorative layer system, such as ink or varnish, is not understood as a structural component.

Contradictory to a packaging with a printed battery wherein the packaging is just a substrate for printing on and wherein the outer surface of the packaging as is with regards to constituting the battery is only required to be suitable for printing the necessary layers upon, in the present invention a structural component of the packaging is an essential component of the actual electric power source and it must have the necessary material characteristics required for proper functioning of the electric power source.

Another example is described in EP2662304 wherein conductive strips are formed onto a bottle surface connecting the cap of the bottle with a power source such that when the cap is removed a circuit is interrupted thereby activating a LED. The cap is merely a switch for activating the LED. However, no component of the packaging offering any contribution to enable the packaging to contain a product or to be transported forms a component of the power source.

Another example is described in EP2225978 wherein an additional plastic inner wall has to be formed in order to create a gap for mounting a thermoelectric power generating element therein.

In other words, the structural component is a component which is essential for the proper functioning of the electric power source and which is inherently already present in the packaging as is before the electric power source is fully constituted thereon. Consequently, it would not be possible to integrate at least partially the process of constituting the electric power source in the manufacturing of a packaging which misses that specific component (specific material layer) because it is necessary for the functioning of the electric power source. Both the smart packaging and the electric power source have a structural component in common, i.e. at least one necessary material layer included in the structure of the packaging, or in the structure of a part of the packaging, and not serving merely as a decorative layer serves as a necessary component of the electric power source.

Consequently, the manufacturing of the electric power source may be at least partially integrated in the manufacturing of the smart packaging, resulting in reduced material cost, reduced production time, and in general reduced production cost, even to the point where it will be cost-effective to put intelligent features and communication means on an inexpensive product, and in particular on disposable products.

In general, the present invention enables intelligent technologies to be integrated up to the level of and into industrial mass production of containers for any type of product.

In the context of the present invention, an electric power source may be any type of device integrated in the packaging, providing electrical energy to any type of electrical energy consuming system present in or on or connected to the packaging. As an example of the latter case, a primary packaging may supply electrical energy to a secondary packaging or vice versa. Such power sources may be batteries (or also called electrochemical cells) such as for example batteries or (super)capacitors, energy harvesting elements such as electromagnetic (e.g. RF) energy harvesters, kinetic, piezoelectric, electrodynamic, thermoelectric generators, photovoltaics (e.g. organic photovoltaics (OPV)), or magnetic field (inductive) energy harvesters, etc.

An energy harvesting element is activated by any type of energy convertible to electrical energy. Depending on the type of energy harvesting element, it may be activated and controlled by several types of activation triggers, such as an electromagnetic field, or by a magnetic field. Further also light (e.g. solar energy), (locally applied) temperature changes, (locally applied) pressure variation or (locally applied) strain variation, movement or vibration may trigger activation. Each type of activation trigger may be generated by means external to the smart packaging, for example generation means provided at the point-of-sale such as an electromagnetic field generator in the shelf of a store or in the cash register.

An energy harvesting element integrated in a smart packaging may be also externally activated by another packaging. The latter may be of any type of (smart) primary or secondary packaging having appropriate means to activate an energy harvesting element constituted in or on another primary or secondary packaging. As an example, an electromagnetic field generated by a secondary packaging may activate an inductive energy harvester on a corresponding primary packaging, or vice versa.

In an embodiment in accordance with the present invention, a smart packaging may additionally comprise any type of supporting electronic systems, which may include digital logic, processing units, memory, gate arrays including programmable gate arrays, passive components, such as resistors, capacitors, inductors, analogue instrumentation, power control circuits, display driver circuits, or any combination thereof. These supporting electronic systems may be built from discrete components attached to the smart packaging substrate, connected by conductive tracks on the substrate, and/or components printed upon the substrate.

More specifically, a smart packaging in accordance with the present invention may comprise an electric power source, wherein a structural component, or a plurality of structural compounds of the packaging forms a component or a plurality of components of the at least one electric power source, and/or additionally a combination of a variable number of components of the following functional areas:
- a sensor: in a smart packaging according to the present invention, any type of sensor suitable for being integrated in smart packaging may be used, being discrete sensor components, or printable sensors, and being able to measure or indicate amongst others light, color, force or strain, proximity, liquid level, flow, gas presence, humidity, viscosity, temperature, pressure, chemical contamination, position and geo-location, acceleration, movement, touch, impact, biometric authentication, etc. They also may capture information from or around the human body (e.g. heart rate, breathing rate, physical activity, sleep pattern, etc.). Also a camera may be present in or on the smart packaging.
- a processing unit: in a smart packaging according to the present invention, any type of processing unit suitable for being integrated in smart packaging may be used. Mainstream chip developers, motivated by the growing loT market, are launching ultra-small ultra-low powered chips with integrated memory. There are emerging technologies that allow processors to be printed on thin film materials, like flexible polyamide, polyester foils, etc. Other systems, such as communications and memory, can also be printed to create specific solutions, known as system on a chip (SoC).
- a communication unit: in a smart packaging according to the present invention, any type of communication unit may be implemented that is suitable for communicating via a connectivity protocol standard or via a custom protocol. A number different connectivity standards have been designed for different data throughputs and transmission ranges. For each embodiment of the present invention the most suitable standard may be determined. Numerous communication means standards exist today, the front runners in the smart phone dominated market are Bluetooth and NFC, for localised communication. However, as more devices are connected to the loT, dedicated networks such as SigFox could play an important part in the future by connecting primary and secondarypackaging to other connected devices and objects anywhere in the world. Bluetooth, Zigbee, Z-wave, 6LowPan, Thread, Wifi, Cellular, NFC, Sigfox, Neul, LoRaWAN, Li-Fi.
- a sensory perceptible output: A sensory perceptible output may be any type of device integrated in the packaging enabling a user or consumer to sense any sensory perceptible status change of the packaging or the . Such output may be visual output, an audio output, a haptic output, or any other output sensible by touch, taste, or smell. More specifically, a visual output may be any device integrated in the packaging enabling an area of the container to emit light, or to change its absorption or transmission of specific wavelengths of light (e.g. colour change), under electrical, electromagnetic, or magnetic control, or triggered by pressure, strain, or temperature variation. Emitting, absorbing, or transmitting light may include showing any kind of colour signal, or presenting a graphic, a text, a logo, a video, including a brand, a label, an interactive label etc., or projecting a graphic, text, logo, etc. onto an object present in the environment. A visual output may be for example any type of display such as amongst others Liquid Crystal Displays (LCD), Electronic Paper Displays (EPD), rigid or flexible organic light-emitting diode (OLED) displays, electrochromic displays, electroluminescent displays, electrophoretic dispays, OLED light sources, LED light sources, or any combination thereof, or any type of projector or beamer with suitable size. A haptic output may be any device integrated in the packaging enabling at least part of the packaging to apply forces, vibrations, or motions, under electrical control, in a way that is felt by a user holding or touching the container, or in a way that the forces, vibration or motions may be transferred to other objects, for example to other bottles in the packaging or on the shelf. Such device may use for example piezoelectric materials. An audio output may by any device integrated in the packaging enabling an area of the packaging to vibrate for transmitting an audio signal into the air, or for transducing an audio signal to other objects surrounding the packaging and allowing transmitting the audio signal in to the air. The frequency range of vibrations may include that of human hearing, as well as ultrasonic and sub-sonic frequencies. An example of an audio output may be electrostatic speakers or thin-film flexible speakers. Other sensory haptic outputs may be any type devices integrated in the packaging enabling a user or consumer to sense any change of surface state of the packaging (e.g. change of roughness, static electricity), to sense a smell which is released upon activation, to sense a taste which is released upon activation, etc.

Embodiments in accordance with the present invention may be directed to primary packaging for beverages, such as a bottle made of glass, or metal (eg. aluminum) or plastic, or a metal can, or metal keg, or wooden bottle or barrel. Such primary packaging may in particular be suitable for carbonated beverages and preferably beer.

Other embodiments in accordance with the present invention may be directed to secondary packaging such as a carton, a multipack, a tray, a HiCone, plastic ring carriers, plastic yokes, paperboard baskets, paperboard overwraps and cartons, corrugated fiberboard boxes, HDPE plastic handles, six pack rings, and shrink packs.

The structural component of the packaging forming a component of the at least one electric power source may be amongst others: the glass of glass container, hot-end-coating layers (e.g. tin oxide, or other oxide, or other equivalent material applied e.g. by chemical vapour deposition, applied e.g. to increase adherence of the cold end coating), cold-end-coating layers (e.g. polyethylene way, or other equivalent material, applied e.g. by spray coating, in order to e.g. make the surfaces more slippery as bottles pass down the line), the plastic of a plastic container, the plastic of a plastic cap or lid, the metal of a metal can including its body, lid, ring pull, or rivet, the metal of a keg including its valve and stem, metal of a metal cap or crown, the inner polymer coating of a metal container, spray coat epoxy (e.g. applied to the raw metal of a metal can or bottle), the metal oxide layer (e.g. implemented by anodising of metal drinks can or bottle substrate), metallic layers (e.g. deposited by plating onto the metal substrate of a drinks can or bottle),polymer layer (e.g. moulded into inside of crown or screw bottle top to form both seal and corrosion protection), the fiberboard or corrugated board of secondary packaging, or plastic parts of secondary packaging (e.g. rings to hold bottles together, or handles), the wood of wooden barrel, etc.

In a general embodiment in accordance with the present invention, a smart metal, glass, paper-based, wood-based, or plastic smart packaging comprising at least one electric power source may be provided, wherein a structural component of the packaging has suitable chemical, electrochemical, dielectric, magnetic, optical, electromechanical, or semiconducting properties to form a component of the at least one electric power source. In other words, the structural component of the packaging forming a component of the at least one electric power source may be selected on the basis of its chemical properties (e.g. TiO2 in solar cell), its electrochemical properties (e.g. Battery anode), its dielectric properties (e.g. RF antenna), its magnetic properties (e.g. inductive antenna), its optical properties (e.g. transparent layer in solar cell), its electromechanical properties (e.g. piezo layer in kinetic energy harvester/actuator), or its semiconducting properties (e.g. hot end oxide coatings).

In an embodiment, the present invention provides a smart metal, glass, paper-based, wood-based, or plastic packaging comprising at least one electric power source, wherein a metal structural component of the smart packaging may form an electrically conductive layer of the at least one electric power source.

The metal structural component forming an electrically conductive layer may be a metal layer of a bottle, can or keg, or the aluminum of a bottle, can or keg, in particular the aluminum of the lid, the tab, the body of a can, or a combination thereof.

The metal structural component forming an electrically conductive layer may also be the metal layer of a beverage keg, typically stainless steel, or of any other type of metal container.

The metal structural component forming an electrically conductive layer may also be a component of a paper-based, wood-based or plastic-based smart packaging. A plastic bottle may comprise for example a metal ring structure in the body or the neck, or a corrugated board tray may comprise a rigidity enhancing metal layer, or a carton packaging may have an integrated metallic (cfr. Tetrapak).

The metal structural component forming an electrically conductive layer may be the metal layer of a closure of a bottle, such as for example the tin plate of a glass bottle crown or the metal of the crown itself, or the aluminum layer of a Roll On Pilfer Proof cap (ROPP).

In an embodiment of the present invention, a metal structural component of the smart packaging may form a current collector of a battery or of an energy harvesting element, or may form an anode and/or cathode of an electrochemical cell used to make a battery.

A metal structural component of the smart packaging may form a thermally conductive material for a thermoelectric generator.

A metal structural component of the smart packaging may also form a ground plane for an RF energy harvester, or as a magnetic material for enhancing performance of inductive energy harvesters.

Further, a metal structural component of the smart packaging may form a mechanically resonant component of a kinetic energy harvesting system. Kinetic energy harvesting systems are also called vibration power generators using resonant systems. They generate maximum power when the resonant frequency of the generator matches movement vibration frequency or ambient vibration frequency. Besides movement of the packaging, kinetic energy may also be induced by adjacent objects external to the packaging itself, such as a vibration motor, or loudspeaker elements.

In a particular embodiment of the present invention, a metallic structural component of the packaging may form an overlap with another metallic component or layer or structural component. Such overlapping metallic layers could be used to form two electrically conducting layers of an electric power source between which an active layer could be placed.

Examples of metallic overlaps may be:
- The folded seam at the top of can overlaps 6 layers of the two substrates.
- Seams in a 3- piece can may provide overlap for multiple metal substrate layers. A functional active layer could be added in between
- Overlap of a ring pull with the top of a can could form two electrodes, with an active layer between the ring pull and can top. The rivet may form electrical connection.
- Overlap of aluminum bottle with screw top or crown top
- Overlap of a conductive foil over the top of a metal crown cap, or metal bottle

In a particular embodiment of the present invention, a smart packaging may be provided wherein an electrically conductive structural component of the packaging forms an electrically conductive layer of an electrochemical cell (battery). More specifically, the electrically conductive structural component may form a bottom current collector layer, and/or a bottom electrode. It is understood by a person skilled in the art that battery chemistry and the electrode material substrate should be matched (for example, both iron and aluminum anode battery chemistries have been demonstrated.)

On top of the bottom electrode, the following additional layers may be deposited to further constitute the electrochemical cell.
- Electrode material (in case the electrode material is not the same material as the current collector layer), which may include both metals or other appropriate materials e.g. carbon, zinc, manganese dioxide, silver oxide (see the following paragraphs with regards to functionalizing a structural component)
- Electrolyte, which may be in the form of a contained liquid, gel or polymer solvent/matrix, with appropriate sealing.
- Top electrode material, to match the base material and electrolyte.
- Top current collector layer, if the top electrode material cannot be used as the top current collector.

In the case of a metal can, these layers may in principle be assembled on either the inside or the outside of the can (i.e. either side of the metal of the can).

Ambient oxygen in the air may also be used as the cathode, in the context of a metal air battery structure which could also use a metal container structural component (e.g. aluminium or iron) as the anode.

An electrolyte as applied in the context of the present invention may typically be a gel or liquid phase material which allows electro-chemical ion flow between the electrodes. It may be applied by any applicable layer deposition technology, or be a contained liquid within encapsulation. Typical electrolyte examples include zinc chloride solutions and potassium hydroxide solutions. More generally, any appropriate solvent containing carrier ions matched to the electrodes, and allowing transfer of said ions between the electrodes, may be suitable. As explained below, in some cases, the liquid to be contained in a primary packaging may also serve as electrolyte.

In another particular embodiment of the present invention, a smart packaging may be provided wherein an electrically conductive structural component of the packaging forms an electrically conductive layer of a photovoltaic cell. More specifically, the electrically conductive structural component may form an electrode. The electrically conducting metal structural component may form the base electrode in the solar cell. Given that metal structural components are typically non-transparent, it is assumed that the light enters the solar cell from the top layer down.

On top of the base electrode, the following additional layers may be deposited to further constitute the photovoltaic cell.
- Active layers (some of these active layers may also already be present in the smart packaging as structural or non-structural component), for example titanium dioxide (TiO2) present in paints used for decoration, metal oxides deposited during hot processing stages
- Top electrode layer, comprised of a transparent electrically conducting material which will allow light to enter the solar cell.

In another particular embodiment of the present invention, a smart packaging may be provided wherein an electrically conductive structural component of the packaging forms an electrically conductive layer of a thermoelectric cell. More specifically, the electrically conductive structural component may form the base electrode of a single thermoelectric cell. On top of this base electrode, the following additional layers may be deposited to further constitute the thermoelectric cell:
- Two separate/parallel layers of appropriate p and n type semiconductor material, for example Bismuth Telluride. These should be electrically isolated from each other using an appropriate encapsulation / insulating material.
- Top electrodes, deposited separately on the p and n type layers, isolated electrically from both each other using an appropriate encapsulation / insulating material.

It is understood by person skilled in the art that in case of a thermoelectric cell, the above layers have to be thermally conductive.

In the case of a metal (or other conductive material) container, these layers may in principle be assembled on either the inside or the outside of the can.

In still another particular embodiment of the present invention, a smart packaging may be provided wherein an electrically conductive structural component of the packaging forms an electrically conductive layer of a force powered or kinetic generator. More specifically, the electrically conductive structural component may form the base electrode in a piezoelectric transducer.

On top of this base electrode, the following additional layers may be deposited to further constitute the piezoelectric transducer:
- Active layer, for example a piezo electric material
- A top electrode layer

In case the smart packaging includes two overlapping electrically conductive layers, the top electrode may also be constituted by structural electrically conductive component of the smart packaging.

In the case of a metal (or other conductive material) container, these layers may in principle be assembled on either the inside or the outside of the can.

In a further embodiment of the present invention, a smart packaging may be provided wherein an electrically conductive structural component of the packaging forms an electrically conductive layer of an electromagnetic energy energy harvesting element. More specifically, the electrically conductive structural component may form the ground plane of an RF antenna structure for harvesting energy.

On top of this ground plane, the following additional layers may be deposited to further constitute the RF energy harvesting element:
- Insulating/dielectric layer. This may include non-conducting paints and/or lacquers already used in the smart packaging manufacturing process
- Conductive antenna layer, the shape of which is designed to match the frequency of RF radiation being harvested.

In another further embodiment of the present invention, a smart packaging may be provided wherein an electrically conductive structural component of the packaging forms an electrically conductive layer of an inductive energy harvesting element. More specifically, the electrically metallic conductive structural component may form the interconnection layer used as bridge between the two sides of the coil of the inductive energy harvesting element.

The exact composition of the metallic conductive structural component may, furthermore, be adjusted to optimize it's magnetic properties to enhance performance of the coil.

On top of this magnetic metallic substrate, the following additional layers may be deposited further constituting the inductive energy harvesting element:
- Insulating/dielectric layer. This may include non-conducting paints and/or lacquers already used in the smart packaging manufacturing process.
- Conductive antenna coil, which may take the form of a spiral, or winding around the outside of the container,

On top of the final encapsulation layer, a bridging conductor may be required to join both sides of the coil up. This function may also be performed by the conductive metallic structural component substrate with appropriate connections made to the two ends of the coil.

In the case of a metal container, these layers may in principle be assembled on either the inside or the outside of the container.

In an embodiment, the present invention provides a smart metal, glass, paper-based, wooden, or plastic packaging comprising at least one electric power source, wherein a glass, paper-based, wooden, or plastic structural component of the smart packaging may form an electrically non-conductive layer of the at least one electric power source.

A glass or plastic structural component of the smart packaging may be for example the glass body or neck of glass bottles, or the plastic body or neck of plastic bottles, or plastic lids.

In an embodiment of the present invention, a glass, paper-based, wooden, or plastic structural component of the smart packaging may form an electrically insulating component, or a protective encapsulating layer.

Further, a glass or plastic structural component of the smart packaging may form a mechanically resonant component of a kinetic energy harvesting system.

In addition, a glass or plastic structural component of the smart packaging may form an optically transparent encapsulating layer, or another optically transparent component of a photovoltaic cell.

Furthermore, electrically non-conductive structural components of the packaging may also form overlapping structures which may be functionalized as explained further in the text, for functioning as two conductive layers, or as active layer.

Examples of such non-conductive overlapping structures may be:
- Overlap between polymer or glass bottle, and respectively screw or crown lid
- Folds and seams in paper cartons
- Polymer sealing layer currently present inside of a metallic bottle tops (both crown and screw top)
- Overlap between polymer layers in "bottle in bottle" containers

In accordance with the present invention, structural components other than metal, glass, paper-based, wooden, or plastic components may be structural coatings. For example, a hot end coating of a glass bottle contains metal oxides and may serve as semi-conducting layer.

In an embodiment of the present invention, a smart packaging may be provided wherein an electrically non-conductive structural component of the packaging forms an electrically non-conductive layer of an electrochemical cell. More specifically, a electrically non-conductive structural component (e.g. glass of a bottle, or cardboard of a secondary packaging) may insulate the electrodes of a battery with planar electrodes in side-by-side configuration.

On top of electrically non-conductive structural component, the following additional layers may be deposited:
- separated bottom conducting current collector areas and electrodes. These may be additionally electrically isolated from each other using an appropriate encapsulation / insulating material.
- Electrode materials upon each current collector area, which may include either metals or other appropriate materials for the chosen battery chemistry e.g. carbon, zinc, manganese dioxide, silver oxide. These should be electrically isolated from each other using an appropriate encapsulation / insulating material.
- Electrolyte, covering both electrodes to join them together chemically. This may take the form of a liquid, gel or polymer solvent/matrix, with appropriate sealing.

In another embodiment of the present invention, a smart packaging may be provided wherein an electrically non-conductive structural component of the packaging forms an electrically non-conductive layer of a photovoltaic cell. More specifically, a transparent electrically non-conductive structural component (e.g. glass of a bottle, or transparent plastic) may form the window of the photovoltaic cell for light to enter the cell.

On top of the non-conductive structural component, the following additional layers may be deposited :
- Bottom electrode layer, comprised of a transparent conducting material, which will allow light to enter the solar cell. It should be noted that transparent conducting metal oxides are commonly used for this function in solar cells; and that metal oxides are also commonly applied to glass bottles as a 'hot end coating' during manufacture. Consequently, the hot end coating could in principle also apply this layer.
- Active layers, of which some may also already be present in the materials used to assemble the container. For example:
   - Titanium dioxide (TiO2) present in paints used for decoration
   - Further layers deposited during hot processing stages
- Top electrode layer. In case the bottom electrode is transparent, this may be a non-transparent or transparent electrode.

In a general embodiment of the present invention, a smart packaging is provided wherein a structural component of the packaging forms a structural component of a battery (an electrochemical cell) and wherein liquid to be contained serves as said battery's electrolyte. For example, for a beverage, and in particular a carbonated beverage such as beer, to function as an electrolyte, the liquid needs to contain dissolved ions matched to the electrode materials. Consequently, one of the following options may be required:
- Ions added to the liquid contents of the container for compatibility with the battery chemistry and electrodes used.
- Electrode materials may be chosen to match the ions already present in the liquid contents of the packaging.
- Both additional ions are added to the liquid contents of the packaging, matched to additional electrodes on walls of the packaging.

In particular beer, which typically contains acid compounds, may serve as electrolyte.

Further, because the liquid forms the electrolyte, it is implicit that the electrochemical cell is constituted inside a primary packaging.

In addition, since normally a packaging for a liquid is not 100% filled, there is an air gap between the electrolyte (the liquid) and the top of the packaging wall, which may change position in the packaging depending upon orientation. By positioning electrodes to take advantage of this, the feature may be used to deliberately activate or de-activate the battery depending upon orientation.

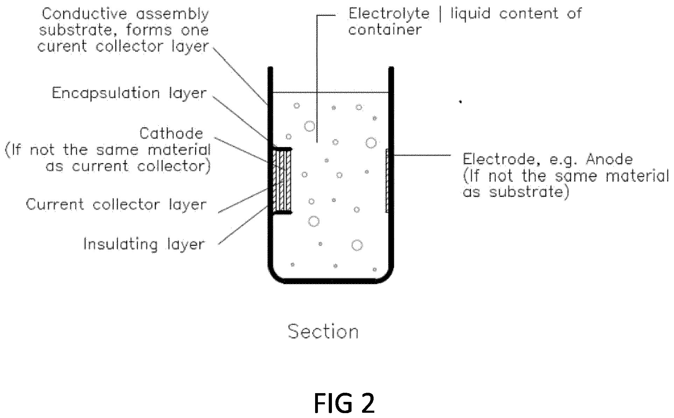

In an embodiment wherein the liquid serves as electrolyte, as shown in FIG 1 and FIG 2 an electrically conductive structural component of the smart packaging may constitute one of the current collectors or one of the electrodes. For example, a metal structural component of the smart packaging forms the current collector layer upon which the electrode is printed; or the metal forms the electrode itself with no current collector required. A non-conducting structural component of the smart packaging has, printed upon it, a current collector layer and/or electrode layers and acts as the electrical isolation between the two layers.

In another embodiment wherein the liquid serves as electrolyte, the smart packaging is a multi- (two or more) part container, the different structural parts of which may be electrically isolated from each other, and each forming different current collectors and/or potentially different electrodes. A first key advantage to the multi-part container structure may be that the joint between the two or more parts of a metallic multi-part container may include an insulating material which electrically isolates the two parts. This allows them to form separate electrodes without the addition of any further isolation. A second key advantage may be that the two conducting parts may be made from different materials, or pre-coated or functionalized with different materials, to themselves form the two different electrodes. This removes the need for any additional coating.

In an embodiment, the present invention provides a smart metal, glass, paper-based, wooden, or plastic packaging comprising at least one electric power source, wherein a structural component of the smart packaging may be functionalized to form an active layer of the at least one electric power source.

In the general context of the present invention, functionalizing the structural component is understood as modifying the structural component in order to make it suitable for being used as a component of the electric power source.

In an embodiment in accordance with the present invention, one or more of the structural components of the smart packaging may comprise additives functionalizing the structural component(s) for being used as a component of at least one electric power source.

Additives may comprise electro-mechanical materials such as piezo-electric materials, electrostatic materials, or magnetic materials, for functionalizing an structural component for being used as an active layer of a kinetic generator or an inductive energy harvesting element.

In an embodiment in accordance with the present invention, one or more of the structural components of the smart packaging may comprise additives functionalizing an electrically non-conductive structural component for being used as an electrically conductive layer of at least one electric power source.

Additives may also be added to a material that allow it to act directly as an electrode in a chosen electrochemical cell chemistry, or to make a material semi-conducting, so as to perform as an active layer in a solar cell or thermoelectric generator or force/kinetic generator.

In an embodiment in accordance with the present invention, one or more of the structural components of the smart packaging may be geometrically functionalized for being used as a component of at least one electric power source. The structural component may be pushed, stamped, or folded, and/or may overlap other structural components for gaining mechanically resonant properties, or create resonant systems or electrically connective structures.

In an embodiment in accordance with the present invention, a method for manufacturing a smart packaging is provided comprising the steps of manufacturing a packaging and constituting at least one electric power source on or in the packaging, wherein a structural component of the packaging is taken for constituting a component of the at least one electric power source.

In method of the present invention, the component constituted from a structural component of the packaging may be any component of the at least one electric power source, such as active layer, an electrically conductive layer (e.g. an electrode), an insulating layer, and encapsulating layer, etc.

The remaining parts of the at least one electric power source, i.e. parts other than the component constituted from the structural component of the packaging or part of it, may be added to the smart packaging by any available technique. Any printing, deposition, or shaping technique may be used including amongst others screen printing, flexography, gravure printing, offset printing, ink jet printing, xerography, lithography, evaporation, sputtering etching, coating, chemical vapour deposition, embossing, stamping, laser patterning, mould patterning, electroplating, anodizing, dip coating, spin coating, gluing, blow moulding of polymers inside containers, etc.

The remaining parts of the at least one electric power source, may also be constituted from a component of the packaging other than a structural component, such as decoration layers, varnishes, lacquers, etc. In such case, besides the fact that the manufacturing of the packaging and constituting the at least one electric power source use a common structural component, additional process steps may be shared for constituting the remaining parts, for example printing a decoration layer which is also an electrically conductive layer, or spraying a coating which is also an electrically insulating layer.

In an embodiment in accordance with the present invention, a method may be provided comprising the step of functionalizing the structural component for being used as a component of at least one electric power source. Such step of functionalizing the structural component of the packaging may be performed in the process of constituting the at least one electric power source after providing the packaging, or may be performed in the process of manufacturing the packaging.

In an embodiment in accordance with the present invention, the step of functionalizing the structural component for being used as a component of at least one electric power source comprises adding additives altering the chemical and/or physical properties of the structural component.

The additives may be added to the raw materials during the raw material production process, for example the additives may be added to glass, plastic or metal before solidifying, or to paper-based pulp. Such additives may be micro-encapsulated for enhancing its functionality.

Additives may also be embedded in the raw materials by rolling or embossing, or bound to the surface by chemical reaction.

In an embodiment in accordance with the present invention, metal, glass, plastic, or paper-based structural components of a packaging may comprise additives functionalizing the structural component for being used as an active layer of at least one electric power source.

In still another embodiment in accordance with the present invention, a method may be provided comprising the step of geometrically functionalizing the structural component for being used as a component of at least one electric power source by exposing the structural component to a shaping step, such as punching, stamping, folding etc. during manufacturing of the packaging. Such process step may give a structural component mechanically resonant properties, or create resonant systems or electrically connective structures.

In still another embodiment in accordance with the present invention, a method may be provided comprising the step of functionalizing the structural component for being used as a component of at least one electric power source by exposing the structural component to heat, such as for example baking or curing, or to annealing, laser irradiation, etc . In addition, the structural component may be directly applied at higher temperature than conventionally done (particularly in the case of glass or metal containers) in order to functionalize it.

A sensor or a plurality of sensors, and/or a communication means and/or a processing unit, and/or any sensory perceptible output, or any other type of supporting electronic component, may be established by adding discrete components to the smart packaging, or preferably by at least partially printing them onto the smart packaging.

In addition, a structural component of the smart packaging may be a component of any type of sensory perceptible output. Such may be the same structural component of the packaging serving as a component of the electric power source, or may be another structural component of the packaging.

Embodiments in accordance with the present invention seek to provide a smart packaging enabling amongst other the following applications:

### EXAMPLES:

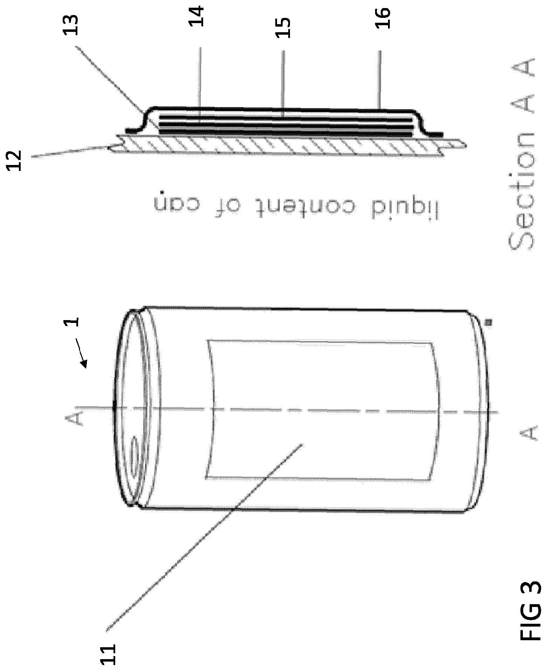

Example 1 as illustrated by FIG 3: An electrochemical cell 11 is formed using the aluminium of an aluminum can 1 as an anode:
The bare aluminum 12 of the can acts as the anode, as well as current collector and assembly substrate.

The additional layers (electrolyte 13, cathode 14, current collector 15, encapsulation layer 16) are selected to form a compatible electrochemical cell with the aluminum anode, and are then deposited onto the outside of the can using any of the deposition techniques described above.

For example, the cathode may be manganese dioxide to form an aluminum manganese dioxide battery.

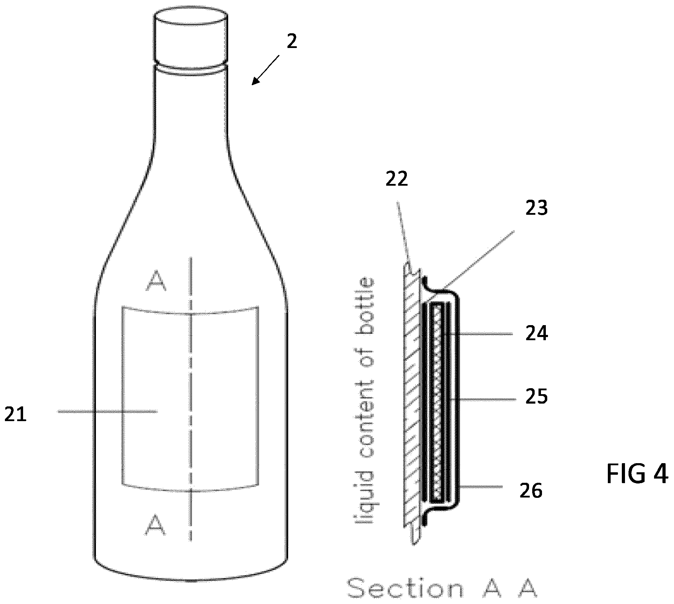

Example 2 as illustrated by FIG 4:. A photo-electric cell 22 is formed using the glass of a glass bottle 2 as the window, and the hot end coating 23 on the glass as the bottom electrode of the cell.

The glass 22 of the bottle acts as the 'window' into the solar cell, by which light enters. Consequently, the solar cell should only partially cover the side of the bottle, allowing light to enter from the other side.

During normal production of the bottle, after forming the glass, it is hot end coated by a metallic oxide forming a transparent conducting layer of for example Indium Tin Oxide (ITO) or Fluorine doped Tin Oxide (FTO). This layer forms the bottom electrode in the cell.

After this stage, active photovoltaic layers 24 are deposited, using any of the techniques as described above. The combination of layers will depend upon the type of solar cell formed. However, they will include a combination of appropriate semiconducting materials which will transfer electrons into or out of the transparent conducting layer when light is present.

On top of the active layers, the second electrode 25 is deposited. This may be either a transparent or non-transparent (e.g. aluminium or silver) conductor, as appropriate for the type of cell being formed.

The final layer is encapsulation 26, and may be formed by the existing packaging coatings already applied to the glass.

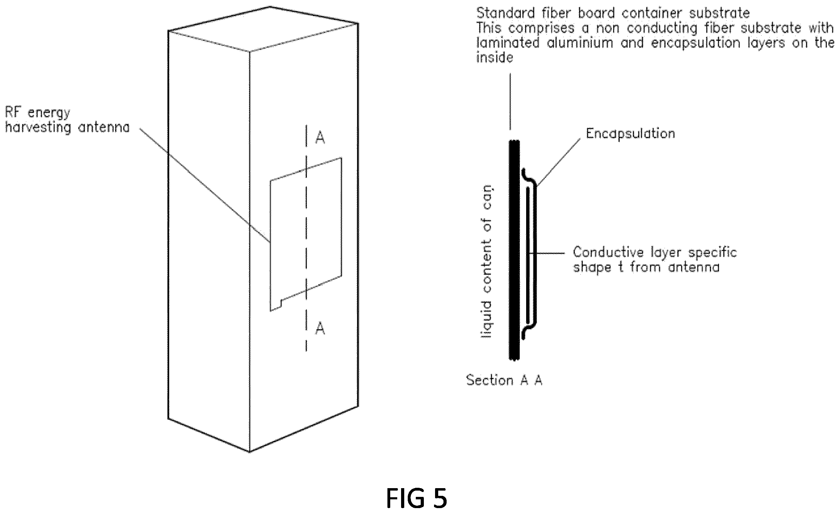

Example 3 as illustrated by FIG 5: . An RF energy harvester is formed using a standard metallized cardboard secondary packaging made from fibre board coated with a metallised film and laminated polymer layer.

A standard metallised fibre board carton substrate (e.g. tetra pak) is used; itself comprising a layer of fibre board (non-conducting), onto the inside of which is added an aluminium layer (conducting) and appropriate conformal coating.

In this case, an additional conductive electrode is deposited upon the outside of the container. This is shaped appropriate to make a 'patch' type antenna element, in combination with the existing container aluminum layer forming the corresponding antenna ground plane. A top encapsulation layer is finally added.

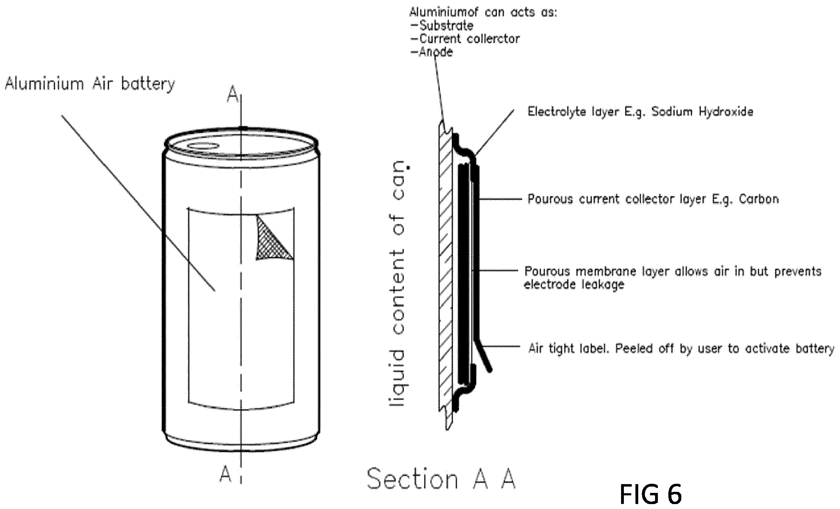

Example 4 as illustrated by FIG 6: an Aluminium air battery is formed. , which is activated by pulling the label off. The bare aluminium of the can acts as the anode, as well as current collector and assembly substrate.

On top of this, the following layers are deposited:
- A liquid/gel electrolyte layer, for example sodium hydroxide.
- A porous electrode e.g. made from carbon and/or a metallic mesh structure coated with carbon. This acts as the current collector for the air cathode.
- An encapsulation coating layer, but with a large gap which is covered by a thin porous membrane suitable for allowing air through, but preventing electrode leakage.

The gap for air ingress is covered by an adhesive label, which is pulled off by the user in order to activate the cell.

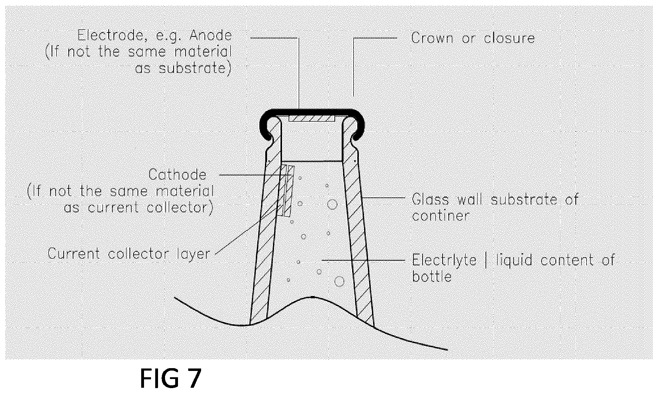

Example 5 as illustrated by FIG 7: A specific embodiment is a smart packaging a glass bottle has a current collector layer and cathode printed on the inside, and wherein the metal crown cap forms the anode. Due to the air gap between the liquid and the metal crown, the battery is activated when the bottle is turned upside down.

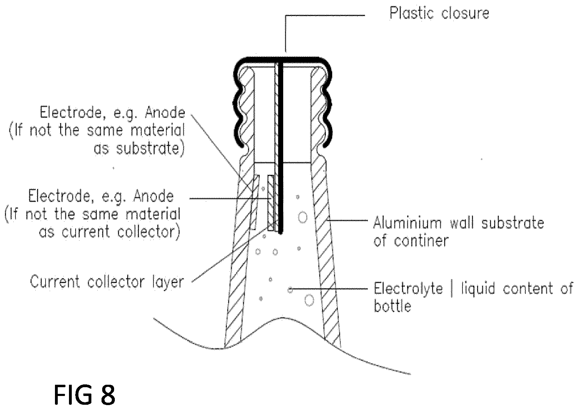

Example 6, as illustrated by FIG 8: In a further variant, an electrically non-conductive cap or crown, may have a conducting insert added to it, which reaches into the liquid, to increase the area of the electrode and/or to ensure contact when an air gap may prevent contact with the liquid. This particular example could apply for a plastic lid on a metal bottle, where a conductive rod reaches from the top of the bottle into the liquid to ensure contact. A specific embodiment thereof is a smart packaging wherein the aluminum of an aluminum bottle forms the anode, or acts as a current collector layer with an anode deposited on top, and wherein the plastic cap has a rod that pokes down into the liquid , and this has the cathode deposited on it.

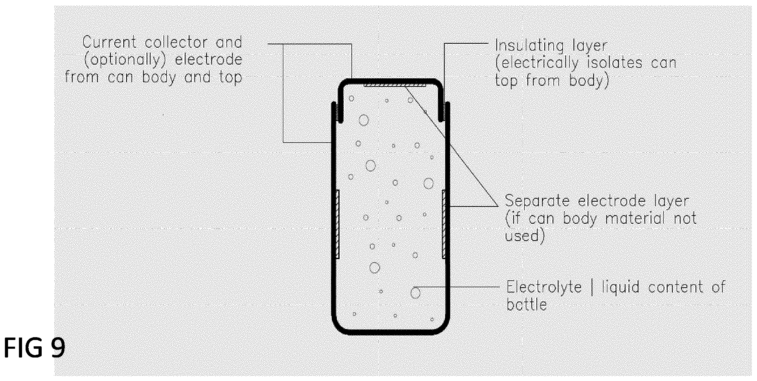

Example 7, as illustrated by FIG 9: In a particular embodiment as illustrated in FIG 3, a two-part aluminum can is disclosed wherein the current collector layers are formed by the can body, and can lid, which are electrically isolated in their join at the top.

The electrodes may in principle be formed from the metal of the can body and from the metal of the lid. Note that the anode and cathode need to be made of different metals of appropriate battery chemistry. For example, the aluminum of the can body may be used as an anode. Alternatively, an additional electrode material layer may be deposited upon the inside of the can lid or body.

An additional benefit of this embodiment is that cans may be stacked to connect cells in series and form a battery in secondary packaging.

## Claims

1. A smart metal, glass, paper-based, wood-based, or plastic packaging comprising at least one electric power source,
**characterized in that** a structural component of the packaging forms a component of the at least one electric power source, said structural component being a component or material layer offering a contribution to enable the packaging to contain a product or to be transported, wherein the structural component is an essential component of the electric power source having the necessary material characteristics required for proper functioning of the electric power source.

2. A smart packaging according to claim 1, wherein said structural component of the packaging is a metal structural component forming an electrically conductive layer of the at least one electric power source.

3. A smart packaging according to claims 2, wherein the metal structural component is a metal layer of a bottle or can, or the aluminum of a bottle or can, in particular the aluminum of the lid, the tab, the body of a can, or a combination thereof, or a metal layer of a keg or any other type of metal container, or wherein the metal structural component is a component of a paper-based, wood-based or plastic-based smart packaging.

4. A smart packaging according to claim 1, wherein a glass, wood-based, paper-based, or plastic structural component of the smart packaging forms an electrically non-conductive layer of the at least one electric power source.

5. A smart packaging according to claim 4, wherein the glass or plastic structural component of the smart packaging is the glass body or neck of glass bottles, or the plastic body or neck of plastic bottles, or plastic lids, or the plastic or paper/cardboard of secondary packaging.

6. A smart packaging according to claim 1, wherein said structural component of the packaging is a metal, glass, plastic, or wooden structural component forming a mechanically resonant component of a kinetic energy harvesting system.

7. A smart packaging according to claim 1, wherein metal, glass, plastic, or paper-based, wood-based structural component of the smart packaging comprises additives functionalizing the structural component for being used as an active layer of at least one electric power source, or functionalizing an electrically non-conductive structural component for being used as an electrically conductive layer of at least one electric power source.

8. A smart packaging according to claim 1, wherein the electric power source is an electrochemical cell and wherein a liquid to be contained serves as said electrochemical cell's electrolyte.

9. A method for manufacturing a smart packaging comprising the steps of manufacturing a packaging and constituting at least one electric power source on or in the packaging, wherein a structural component of the packaging is taken for constituting a component of the at least one electric power source, said structural component being a component or material layer offering a contribution to enable the packaging to contain a product or to be transported, and wherein the structural component is an essential component of the electric power source having the necessary material characteristics required for proper functioning of the electric power source.

10. A method according to claim 9, wherein said structural component of the packaging is selected based on its chemical, electrochemical, dielectric, magnetic, optical, electromechanical, or semiconducting properties to form a component of the at least one electric power source.

11. A method according to claims 9 or 10, wherein the manufacturing of the packaging and constituting the at least one electric power source share at least one additional process step for constituting the remaining parts of the electric power source, said remaining parts being parts other than the component constituted from the structural component of the packaging or part of it.

12. A method according to claims 9 or 10, comprising a step of functionalizing the structural component of the packaging for being used as a component of the at least one electric power source.

13. A method according to claim 12, wherein the step of functionalizing the structural component of the packaging is performed in the process of manufacturing the packaging.

14. A method according to claims 12 or 13, wherein the step of functionalizing the structural component of the packaging for being used as a component of the at least one electric power source comprises adding additives to the structural component.

15. A method according to claims 12 or 13, comprising the step of geometrically functionalizing the structural component for being used as a component of at least one electric power source.

16. A method according to claim 9, comprising the step of adding a sensor and/or a communication means and/or a processing unit and/or a sensory perceptible output by at least partially printing it onto the smart packaging.

## Patentansprüche

1. Intelligente Metall-, Glas-, papierbasierte, holzbasierte oder Kunststoffverpackung, umfassend mindestens eine elektrische Energiequelle,
**dadurch gekennzeichnet, dass** eine strukturelle Komponente der Verpackung eine Komponente der mindestens einen elektrischen Energiequelle bildet, wobei die strukturelle Komponente eine Komponente oder eine Materialschicht ist, die dazu beiträgt, dass die Verpackung ein Produkt enthalten kann oder transportiert werden kann, wobei die strukturelle Komponente eine wesentliche Komponente der elektrischen Energiequelle mit den notwendigen Materialkennzeichen ist, die zur ordnungsgemäßen Funktion der elektrischen Energiequelle erforderlich sind.

2. Intelligente Verpackung nach Anspruch 1, wobei die strukturelle Komponente der Verpackung eine strukturelle Metallkomponente ist, die eine elektrisch leitende Schicht der mindestens einen elektrischen Energiequelle bildet.

3. Intelligente Verpackung nach Anspruch 2, wobei die strukturelle Metallkomponente eine Metallschicht einer Flasche oder Dose oder das Aluminium einer Flasche oder Dose ist, insbesondere das Aluminium des Deckels, der Lasche, des Körpers einer Dose oder eine Kombination davon, oder eine Metallschicht eines kleinen Fasses oder einer anderen Art von Metallbehälter ist, oder wobei die strukturelle Metallkomponente eine Komponente einer intelligenten papier-, holz- oder kunststoffbasierten Verpackung ist.

4. Intelligente Verpackung nach Anspruch 1, wobei eine strukturelle Glas-, holzbasierte, papierbasierte oder Kunststoffkomponente der intelligenten Verpackung eine elektrisch nicht-leitende Schicht der mindestens einen elektrischen Energiequelle bildet.

5. Intelligente Verpackung nach Anspruch 4, wobei die strukturelle Glas- oder Kunststoffkomponente der intelligenten Verpackung der Glaskörper oder -hals von Glasflaschen oder der Kunststoffkörper oder -hals von Kunststoffflaschen oder Kunststoffdeckel oder der Kunststoff oder das Papier / der Karton von einer sekundären Verpackung ist.

6. Intelligente Verpackung nach Anspruch 1, wobei die strukturelle Komponente der Verpackung eine strukturelle Metall-, Glas-, Kunststoff- oder Holzkomponente ist, die eine mechanisch resonante Komponente eines kinetischen Energiegewinnungssystems bildet.

7. Intelligente Verpackung nach Anspruch 1, wobei die strukturelle Metall-, Glas-, Kunststoff- oder papierbasierte, holzbasierte Komponente der intelligenten Verpackung Zusatzstoffe umfasst, die die strukturelle Komponente zur Verwendung als aktive Schicht mindestens einer elektrischen Energiequelle funktionalisiert, oder eine elektrisch nicht-leitende strukturelle Komponente zur Verwendung als elektrisch leitende Schicht mindestens einer elektrischen Energiequelle funktionalisiert.

8. Intelligente Verpackung nach Anspruch 1, wobei die elektrische Energiequelle eine elektrochemische Zelle ist und wobei eine zu enthaltende Flüssigkeit als Elektrolyt der elektrochemischen Zelle dient.

9. Verfahren zur Herstellung einer intelligenten Verpackung, umfassend die Schritte des Herstellens einer Verpackung und des Bildens mindestens einer elektrischen Energiequelle auf oder in der Verpackung, wobei eine strukturelle Komponente der Verpackung zum Bilden einer Komponente der mindestens einen elektrischen Energiequelle verwendet wird, wobei die strukturelle Komponente eine Komponente oder eine Materialschicht ist, die dazu beiträgt, dass die Verpackung ein Produkt enthalten kann oder transportiert werden kann, und wobei die strukturelle Komponente eine wesentliche Komponente der elektrischen Energiequelle mit den notwendigen Materialkennzeichen ist, die zur ordnungsgemäßen Funktion der elektrischen Energiequelle erforderlich sind.

10. Verfahren nach Anspruch 9, wobei die strukturelle Komponente der Verpackung basierend auf ihren chemischen, elektrochemischen, dielektrischen, magnetischen, optischen, elektromechanischen oder halbleitenden Eigenschaften ausgewählt wird, um eine Komponente der mindestens einen elektrischen Energiequelle zu bilden.

11. Verfahren nach Anspruch 9 oder 10, wobei das Herstellen der Verpackung und das Bilden der mindestens einen elektrischen Energiequelle mindestens einen zusätzlichen Verfahrensschritt zum Bilden der übrigen Teile der elektrischen Energiequelle gemeinsam haben, wobei die übrigen Teile andere Teile als die Komponente sind, die aus der strukturellen Komponente der Verpackung oder eines Teils davon gebildet ist.

12. Verfahren nach Anspruch 9 oder 10, umfassend einen Schritt des Funktionalisierens der strukturellen Komponente der Verpackung zur Verwendung als Komponente der mindestens einen elektrischen Energiequelle.

13. Verfahren nach Anspruch 12, wobei der Schritt des Funktionalisierens der strukturellen Komponente der Verpackung in dem Prozess des Herstellens der Verpackung ausgeführt wird.

14. Verfahren nach Anspruch 12 oder 13, wobei der Schritt des Funktionalisierens der strukturellen Komponente der Verpackung zur Verwendung als Komponente der mindestens einen elektrischen Energiequelle die Zugabe von Zusatzstoffen zur strukturellen Komponente umfasst.

15. Verfahren nach Anspruch 12 oder 13, umfassend den Schritt des geometrischen Funktionalisierens der strukturellen Komponente zur Verwendung als Komponente mindestens einer elektrischen Energiequelle.

16. Verfahren nach Anspruch 9, umfassend den Schritt des Hinzufügens eines Sensors und/oder eines Kommunikationsmittels und/oder einer Verarbeitungseinheit und/oder einer sensorisch wahrnehmbaren Ausgabe durch mindestens teilweises Aufdrucken von diesen auf die intelligente Verpackung.

## Revendications

1. Emballage intelligent en métal, en verre, à base de papier, à base de bois ou en plastique, comprenant au moins une source d'énergie électrique ;
**caractérisé en ce qu'**un composant structurel de l'emballage forme un composant de l'au moins une source d'énergie électrique, ledit composant structurel étant un composant ou une couche de matériau contribuant à permettre à l'emballage de contenir un produit ou d'être transporté, dans lequel le composant structurel est un composant essentiel de la source d'énergie électrique présentant les caractéristiques matérielles nécessaires qui sont requises pour assurer un fonctionnement approprié de la source d'énergie électrique.

2. Emballage intelligent selon la revendication 1, dans lequel ledit composant structurel de l'emballage est un composant structurel en métal formant une couche conductrice d'électricité de l'au moins une source d'énergie électrique.

3. Emballage intelligent selon la revendication 2, dans lequel le composant structurel métallique est une couche métallique d'une bouteille ou d'une canette, ou l'aluminium d'une bouteille ou d'une canette, en particulier l'aluminium du couvercle, de la languette, du corps d'une canette, ou une combinaison de ceux-ci, ou une couche métallique d'un baril ou d'un quelconque autre type de récipient métallique, ou dans lequel le composant structurel métallique est un composant d'un emballage intelligent à base de papier, à base de bois ou à base de plastique.

4. Emballage intelligent selon la revendication 1, dans lequel un composant structurel en verre, à base de bois, à base de papier, ou en plastique de l'emballage intelligent forme une couche non conductrice d'électricité de l'au moins une source d'énergie électrique.

5. Emballage intelligent selon la revendication 4, dans lequel le composant structurel en verre ou en plastique de l'emballage intelligent constitue le corps ou le col en verre de bouteilles en verre, ou le corps ou le col en plastique de bouteilles en plastique, ou des couvercles en plastique, ou le plastique ou le papier/carton d'un emballage secondaire.

6. Emballage intelligent selon la revendication 1, dans lequel ledit composant structurel de l'emballage est un composant en métal, en verre, en plastique ou en bois formant un composant à résonance mécanique d'un système de récupération d'énergie cinétique.

7. Emballage intelligent selon la revendication 1, dans lequel le composant structurel en métal, en verre, en plastique, ou à base de papier, à base de bois de l'emballage intelligent comprend des additifs fonctionnalisant le composant structurel en vue de son utilisation comme couche active d'au moins une source d'énergie électrique, ou fonctionnalisant un composant structurel non conducteur d'électricité en vue de son utilisation comme couche conductrice d'au moins une source d'énergie électrique.

8. Emballage intelligent selon la revendication, dans lequel la source d'énergie électrique est une cellule électrochimique et dans lequel un liquide devant être contenu sert d'électrolyte de ladite cellule électrochimique.

9. Procédé de fabrication d'un emballage intelligent, comprenant les étapes de fabrication d'un emballage et de formation d'au moins une source d'énergie électrique sur ou dans l'emballage, dans lequel un composant structurel de l'emballage est utilisé pour constituer un composant de l'au moins une source d'énergie électrique, ledit composant structurel étant un composant ou une couche de matériau contribuant à permettre à l'emballage de contenir un produit ou d'être transporté, et dans lequel le composant structurel constitue un composant essentiel de la source d'énergie électrique présentant les caractéristiques matérielles nécessaires qui sont requises pour assurer un fonctionnement approprié de la source d'énergie électrique.

10. Procédé selon la revendication 9, dans lequel ledit composant structurel de l'emballage est sélectionné sur la base de ses propriétés chimiques, électrochimiques, diélectriques, magnétiques, optiques, électromécaniques ou semi-conductrices pour former un composant de l'au moins une source d'énergie électrique.

11. Procédé selon la revendication 9 ou la revendication 10, dans lequel les étapes de production de l'emballage et de formation de l'au moins une source d'énergie électrique partagent au moins une étape additionnelle du procédé pour constituer les parties restantes de la source d'énergie électrique, lesdites parties restantes étant des parties autres que le composant constitué à partir du composant structurel de l'emballage ou d'une partie de celui-ci.

12. Procédé selon les revendications 9 ou 10, comprenant une étape de fonctionnalisation du composant structurel de l'emballage en vue de son utilisation comme composant de l'au moins une source d'énergie électrique.

13. Procédé selon la revendication 12, dans lequel l'étape de fonctionnalisation du composant structurel de l'emballage est exécutée dans le cadre du processus de fabrication de l'emballage.

14. Procédé selon les revendications 12 ou 13, dans lequel l'étape de fonctionnalisation du composant structurel de l'emballage en vue de son utilisations comme composant de l'au moins une source d'énergie électrique comprend l'addition d'additifs au composant structurel.

15. Procédé selon les revendications 12 ou 13, comprenant l'étape de fonctionnalisation géométrique du composant structurel en vue de son utilisation comme composant de l'au moins une source d'énergie électrique.

16. Procédé selon la revendication 9, comprenant l'étape d'addition d'un capteur et/ou d'un moyen de communication et/ou d'une unité de traitement et/ou d'une sortie sensorielle perceptible en l'imprimant au moins partiellement sur l'emballage intelligent.
